# EUROPÄISCHE PATENTSCHRIFT

(11) **EP 1 131 182 B1**
(45) Veröffentlichungstag und Bekanntmachung des Hinweises auf die Patenterteilung: **19.01.2005**
(21) Anmeldenummer: 99950427.7
(22) Anmeldetag: 04.11.1999
(51) Int. Cl.: B23K 26/00, B23K 33/00

(54) **VERFAHREN UND VORRICHTUNG ZUM SCHWEISSEN VON BLECHEN MIT EINEM LASER**
METHOD AND DEVICE FOR LASER WELDING METAL SHEETS
PROCEDE ET DISPOSITIF POUR LE SOUDAGE DE TOLES AVEC UN LASER

(30) Priorität: 18.11.1998 CH 230898
(43) Veröffentlichungstag der Anmeldung: 12.09.2001
(73) Patentinhaber: ELPATRONIC AG, 8962 Bergdietikon (CH)
(72) Erfinder: WILDMANN, Daniel, CH-8166 Niederweningen (CH); AEBERSOLD, Hans, CH-8903 Birmensdorf (CH); VAN DER SCHAAR, Martin, CH-8472 Seuzach (CH)
(86) Internationale Anmeldenummer: PCT/CH1999/000518
(87) Internationale Veröffentlichungsnummer: WO 2000/029165

(56) Entgegenhaltungen:
- EP-A- 0 565 846
- WO-A-84/03059
- DE-C- 19 623 664

## Beschreibung

Die vorliegende Erfindung betrifft eine Vorrichtung nach dem Oberbegriff des Patentanspruchs 1 sowie eine Verwendung der Vorrichtung.

Das Verschweissen von Blechen mit Hilfe eines Lasers ist ein heute verbreitetes Verbindungsverfahren. Dabei werden die Bleche vorzugsweise stumpf miteinander verbunden, indem die Stirnflächen der zu verbindenden Bleche derart positioniert werden, dass nur ein enger Spalt zwischen den Blechen besteht. Um eine hohe Qualität der Schweissnaht zu erreichen, darf der Spalt zwischen den zu verbindenden Blechen nicht breiter als 0,05 bzw. 0,08 mm sein, womit die Abweichungen eines einzelnen Bleches die Hälfte dieser maximal zulässigen Spaltbreiten nicht überschreiten dürfen. Es liegt auf der Hand, dass zur Einhaltung solcher Toleranzen entsprechend kostspielige Werkzeuge oder aber aufwendige Bearbeitungsverfahreh notwendig sind.

Aus der europäischen Patentanmeldung EP-0 565 846 ist bekannt, bei geradlinigen Schweissnähten mindestens eines der Bleche vor oder in der Schweisszone mit Hilfe einer Quetschrolle derart plastisch zu verformen, dass die maximal zulässige Spaltbreite zwischen den zu verbindenden Blechen unterschritten wird. Im Zusammenhang mit der bekannten Lehre sind eine Reihe von Ausführungsformen beschrieben, die sich besonders auf die unterschiedliche Ausgestaltung der Quetschrollen beziehen.

Die bekannte Lehre eignet sich ausschliesslich für gradlinige Schweissnähte und ist insbesondere ungeeignet, wenn eine beliebige Linienführungen für die Schweissnähte gefordert ist, da in solchen Fällen die gemäss der bekannten Lehre vorgeschlagenen Quetschrollen seitliche Kräfte erzeugen, die zu unerwünschten Blechverformungen führen können.

Der vorliegenden Erfindung liegt daher die Aufgabe zugrunde, eine Vorrichtung anzugeben, bei der die Schweissnähte einen beliebigen Verlauf aufweisen können.

Diese Aufgabe wird durch die im Patentanspruchs 1 angegebenen Massnahmen gelöst. Vorteilhafte Ausgestaltungen der Erfindung sowie eine Verwendung der Vorrichtung sind in weiteren Ansprüchen angegeben.

Die Erfindung weist folgende Vorteile auf: Indem mit Hilfe eines Quetschkörpers eine plastische Verformung erwirkt wird, die unabhängig von der Fortbewegungsrichtung des Quetschkörpers auf dem jeweiligen Blech ist, ist eine beliebige Linienführung für eine Schweissnaht möglich, ohne dass ein unzulängliches Verformen der zu verschweissenden Bleche entstehen kann. Die erfindungsgemässe Vorrichtung kann somit zum Verschweissen von beliebig geformten Blechen verwendet werden.

Da der Quetschkörper aus einer Kugel besteht, ist eine äusserst kompakte erfindungsgemässe Vorrichtung erhältlich, da der Radius der Kugel verglichen mit den äusseren Abmessungen der bekannten Quetschrollen erheblich reduziert ist, womit' auch die auf die Quetschkugel wirkende Kraft bei gleicher Wirkung reduziert werden kann.

Schliesslich kann bei Ausbildung des erfindungsgemässen Quetschkörpers als Quetschkugel, die Halterung der Quetschkugel in bezug auf die durch die zu verschweissenden Bleche schräg gestellt werden. Damit ist die Stossstelle der Bleche frei zugänglich, womit insbesondere Erfassungseinrichtungen zur Erfassung der aktuellen Spaltbreite zwischen den Blechen im Quetschbereich eingesetzt werden können. Damit lässt sich die auf die Quetschkugel wirkende Kraft in Abhängigkeit der momentanen Spaltbreite einstellen.

Die Erfindung wird nachfolgend anhand von Zeichnungen beispielsweise näher erläutert. Dabei zeigen
- Fig. 1: einen Schnitt durch eine erfindungsgemässe Anordnung senkrecht auf zwei zu verschweissende Bleche ungleicher Dicke im Bereich der Schweisszone,
- Fig. 2: einen Schnitt durch eine weitere Ausführungsform der Erfindung senkrecht auf zwei zu verschweissende Bleche gleicher Dicke,
- Fig. 3: einen Schnitt gemäss Fig. 2 durch eine weitere Ausführungsform der Erfindung und
- Fig. 4: einen Schnitt gemäss Fig. 2 durch eine weitere Ausführungsform der Erfindung.

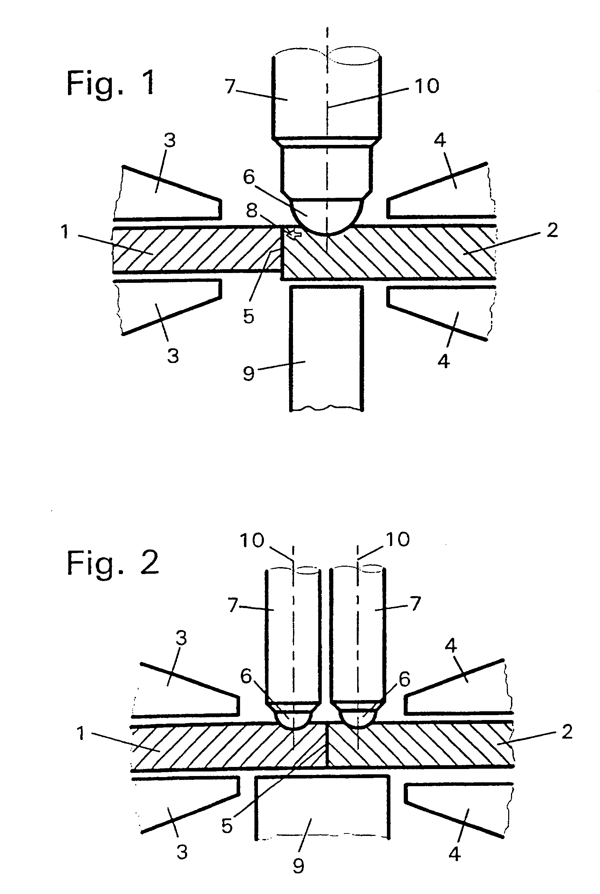

Fig. 1 zeigt einen Schnitt durch eine erfindungsgemässe Vorrichtung senkrecht auf zwei zu verbindende Bleche 1 und 2, von denen eines dicker ist als das andere. Die beiden Bleche 1 und 2 liegen mit ihren Stirnflächen aneinander an und werden in dieser Lage stumpf miteinander verschweisst. Die Verschweissung erfolgt in an sich bekannter Weise durch einen Laserstrahl, welcher in der Schweisszone einen fokusierten Querschnitt mit einem Durchmesser von beispielsweise 0,2 mm aufweist. Damit die Schweissung die erforderliche Qualität aufweist und frei von Fehlern ist, darf der Spalt zwischen den aneinander angrenzenden Blechen 1 und 2 in der Schweisszone maximal 0,08 mm betragen. Bei einer grösseren Breite kommt es zu einem Schweissnahteinfall oder zu einem Durchbrechen des Strahles.

Vor bzw. in der Schweisszone wird nun gemäss Fig. 1 das Blech 2 mit Hilfe eines Quetschkörpers, der aus einer Halterung 7 und einer in diese eingelassenen Kugel 6 besteht, plastisch verformt, so dass sich ein zwischen den Blechen 1 und 2 vorhandener Spalt verringert bzw. so dass die vorstehend genannte maximal zulässige Spaltbreite unterschritten wird. Die Halterung 7 wird hierzu senkrecht gegen das Blech 2 gepresst, wodurch ein Fliessen des verformten Materials hauptsächlich in Richtung des Pfeiles 8 erfolgt.

Während dem Quetschvorgang wird das Blech 2 durch ein Stützelement 9, das sich gegenüber der auf das Blech 2 wirkenden Quetschkugel 6 befindet, abgestützt. Des weiteren sind Halterungseinrichtungen 3 und 4 vorgesehen, welche die beiden Bleche 1 und 2 zumindest während dem Quetschvorgang und/oder dem anschliessenden Schweissvorgang fixieren. Als Halterungseinrichtungen 3 und 4 kommen dabei eigentliche Klemmen zum Einsatz.

Die in Fig. 1 dargestellte Halterung 7 ist mit einer Achse 10 versehen, mit der auf die rotationssymmetrische Ausführungform der Halterung 7 hingewiesen wird.

Fig. 2 zeigt einen Schnitt durch eine weitere Ausführungsform der erfindungsgemässen Vorrichtung. Dabei sind die zu verschweissenden Bleche 1 und 2 von gleicher Dicke. Anstelle von einer einzigen Quetschkugel 6 kommen nunmehr zwei Quetschkugeln 6 zum Einsatz und zwar wirken diese senkrecht von oben auf je eines der Bleche 1 und 2. Diese Anordnung zeichnet sich insbesondere dadurch aus, dass beide Bleche 1 und 2 verformt werden, womit für das Erreichen der gleichen Wirkung kleinere Verformungen notwendig sind. Mit anderen Worten können unter Verwendung dieser Ausführungsform auch grössere Spaltbreiten zwischen miteinander zu verschweissenden Blechen 1 und 2 auf die maximal zulässige Spaltbreite reduziert werden.

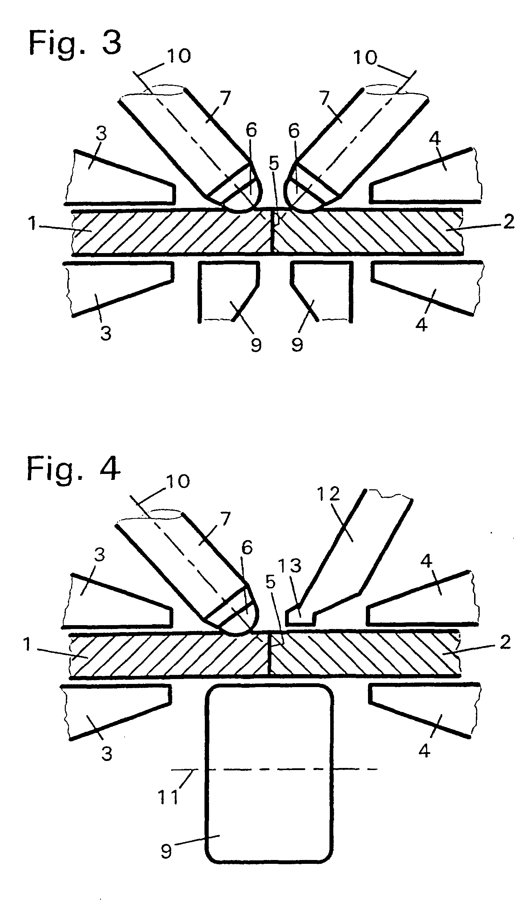

Eine weitere Ausführungsform ist in Fig. 3 dargestellt, wobei sich diese insbesondere dadurch von derjenigen nach Fig. 2 unterscheidet, dass die Achsen 10 der Halterungen 7 mit der Ebene der Bleche 1 und 2 einen spitzen Winkel einschliessen. Dadurch ist genügend Platz an der Stossstelle 5 vorhanden, um beispielsweise mittels einer Erfassungseinrichtung die aktuelle Spaltbreite zu erfassen, aufgrund der die auf die Halterung 7 wirkende Presskraft durch eine Steueranordnung einstellbar ist.

Des weiteren ist bei der in Fig. 3 dargestellten Ausführungsform das Stützelement 9 gegenüber dem in Fig. 2 gezeigten zweigeteilt. Damit wird auch die Unterseite der-Stossstelle 5 frei zugänglich, was wiederum bei der Bestimmung der Spaltenbreite mittels der Erfassungseinrichtung von Vorteil ist.

In Fig. 4 ist eine bevorzugte Ausführungsform der erfindungsgemässen Vorrichtung dargestellt, bei der eine Halterung 7 für eine Quetschkugel 6 in bezug auf die durch das Blech 1 gebildete Ebene schräg verläuft. Durch die Schrägstellung wird ermöglicht, dass die Verformung des Bleches 1 möglichst nahe bei der Stossstelle 5 vorgenommen werden kann. Das Blech 2 wird durch eine Fixiereinheit 12, die einen mit dem Blech 2 in Kontakt tretenden Fixierschuh 13 am untere Ende aufweist, gegen das Stützelement 9 gedrückt und somit in der Position fixiert. Damit wird ein seitliches Wegdrücken des Bleches 2 durch das allenfalls zu stark verformte Blech 1 verhindert.

Aus Fig. 4 ist weiter ersichtlich, dass die Fixiereinheit 12 stabförmig ausgebildet ist und in bezug auf eine durch das Blech 2 gebildeten Ebene schräg gestellt ist. Damit ist die Stossatelle 5 wiederum für zusätzliche Einrichtungen leicht zugänglich.

Das Stützelement 9 ist bei der in Fig. 4 dargestellten Ausführungsform als Rolle mit einer Drehachse 11 ausgebildet. Die Rolle erstreckt sich über die Stossstelle 5 und stützt somit beide Bleche 1 und 2. Denkbar ist auch, dass für jedes Blech 1 und 2 ein Stützelement 9 analog zu denjenigen in Fig. 3 dargestellten vorgesehen ist, allerdings besteht jedes der Stützelemente 9 aus einer Rolle mit einer Drehachse 11.

## Patentansprüche

1. Vorrichtung zum Schweissen von Blechen (1, 2) im Stumpfstoss mittels Laser, wobei mindestens eines der Bleche (1, 2) vor oder in der Schweisszone mit einem Quetschkörper (6) plastisch verformt wird, **dadurch gekennzeichnet, dass** der Quetschkörper (6) zur Reduktion eines an der Stossstelle (5) vorhandenen Spaltes zwischen den Blechen (1, 2) als Quetschkugel ausgebildet und in einer Halterung (7) drehbar gelagert ist.

2. Vorrichtung nach Anspruch 1, **dadurch gekennzeichnet, dass** die Längsachse (10) mindestens einer der Halterungen (7) in bezug auf eine durch die Bleche (1, 2) gebildete Ebene einen spitzen Winkel bildet.

3. Vorrichtung nach einem der Ansprüche 1 bis 2, **dadurch gekennzeichnet, dass** eine Fixiereinheit (12), deren Längsachse vorzugsweise einen spitzen Winkel mit der durch die Bleche (1, 2) gebildeten Ebene einschliesst, im Bereich der Stossstelle (5) auf eines der Bleche (1, 2) wirkt.

4. Vorrichtung nach einem der Ansprüche 1 bis 3, **dadurch gekennzeichnet, dass** Halteeinrichtungen (3, 4) vorgesehen sind, welche die Bleche (1, 2) mit ihren Stirnseiten aneinanderliegend fixiert.

5. Vorrichtung nach einem der Ansprüche 1 bis 4, **dadurch gekennzeichnet, dass** eine Erfassungseinrichtung zur Erfassung der Spaltbreite vor der Verformungszone und eine Steueranordnung vorgesehen sind, welche in Abhängigkeit von der erfassten Spaltbreite die Halterung (7) steuert.

6. Vorrichtung nach einem der Ansprüche 1 bis 5, **dadurch gekennzeichnet, dass** eine optische oder mechanische Erkennungseinrichtung zur Erkennung des Verlaufs des Spaltes nach der Verformung und eine auf die Erkennungseinrichtung ansprechende Nachführungsanordnung zur Nachführung des Laserstrahls entsprechend dem Spaltverlauf vorgesehen sind.

7. Verwendung der Vorrichtung nach einem der Ansprüche 1 bis 6 zum Schweissen von Blechen (1, 2) im Stumpfstoss.

## Claims

1. Apparatus for butt-welding metal sheets (1, 2) by means of a laser, wherein at least one of the sheets (1, 2) is plastically deformed with a squeezer (6) before or in the welding zone, **characterized in that** the squeezer (6) for reducing the gap between the sheets (1, 2) at the joint (5) is configured as a squeezing ball and is mounted rotatably in a holder (7).

2. Apparatus according to Claim 1, **characterized in that** the longitudinal axis (10) of at least one of the holders (7) forms an acute angle with a plane formed by the sheets (1, 2).

3. Apparatus according to Claim 1 or Claim 2, **characterized in that** a fixing unit (12) whose longitudinal axis preferably includes an acute angle with the plane formed by the sheets (1, 2) acts on one of the sheets (1, 2) in the region of the joint (5).

4. Apparatus according to any one of Claims 1 to 3, **characterized in that** holding devices (3, 4) are provided which [fix] the sheets (1, 2) with their edges adjacent to each other.

5. Apparatus according to any one of Claims 1 to 4, **characterized in that** a detection device for detecting the width of the gap before the deformation zone, and a control arrangement which controls the holder (7) as a function of the detected gap width, are provided.

6. Apparatus according to any one of Claims 1 to 5, **characterized in that** an optical recognition device or mechanical sensing device for ascertaining the line of the gap after deformation, and a tracking arrangement, responding to the recognition or sensing device, for guiding the laser beam along the line of the gap, are provided.

7. Use of the apparatus according to any one of Claims 1 to 6 for butt-welding metal sheets (1, 2).

## Revendications

1. Dispositif pour souder des tôles (1,2) en aboutement à l'aide d'un laser, dans lequel au moins l'une des tôles (1,2) est déformée plastiquement en avant de ou dans la zone de soudage avec un corps d'écrasement (6), **caractérisé en ce que** le corps d'écrasement (6) est agencé sous la forme d'une bille d'écrasement pour la réduction d'une fente, présente au niveau de la zone d'aboutement (5), entre les tôles (1,2) et est monté de manière à pouvoir tourner dans un dispositif de retenue (7).

2. Dispositif selon la revendication 1, **caractérisé en ce que** l'axe longitudinal (10) au moins de l'un des dispositifs de retenue (7) fait un angle aigu par rapport à un plan formé par les tôles (1,2).

3. Dispositif selon l'une des revendications 1 et 2, **caractérisé en ce qu'**une unité de fixation (12), dont l'axe longitudinal fait de préférence un angle aigu par rapport au plan formé par les tôles (1,2), agit sur l'une des tôles (1,2) au niveau de l'emplacement de la zone d'aboutement (5).

4. Dispositif selon l'une des revendications 1 à 3, **caractérisé en ce qu'**il est prévu des dispositifs de retenue (3,4) qui fixent les tôles (1,2) entre elles au niveau de leurs faces frontales.

5. Dispositif selon l'une des revendications 1 à 4, **caractérisé en ce qu'**il est prévu un dispositif de détection servant à détecter la largeur de la fente en avant de la zone de déformation et un dispositif de commande, qui commande le dispositif de retenue (7) en fonction de la largeur de fente détectée.

6. Dispositif selon l'une des revendications 1 à 5, **caractérisé en ce qu'**il est prévu un dispositif d'identification optique ou mécanique servant à identifier l'allure de la fente après la déformation et un dispositif d'asservissement, qui répond au dispositif d'identification et sert à réaliser l'asservissement du faisceau laser conformément à l'allure de la fente.

7. Utilisation du dispositif selon l'une des revendications 1 à 6 pour le soudage de tôles (1,2) en aboutement.
